Europäisches Patentamt

(19) European Patent Office

Office européen des brevets

(11) Publication number: **0 049 627**
**B1**

(12) **EUROPEAN PATENT SPECIFICATION**

(45) Date of publication of patent specification: **09.12.87**

(21) Application number: **81304592.9**

(22) Date of filing: **05.10.81**

(51) Int. Cl.⁴: **H 04 L 7/10, G 06 F 13/42**

(54) Byte-to-bit synchronizing circuitry.

(30) Priority: **06.10.80 US 194495**

(43) Date of publication of application:
**14.04.82 Bulletin 82/15**

(45) Publication of the grant of the patent:
**09.12.87 Bulletin 87/50**

(84) Designated Contracting States:
**BE CH DE FR GB IT LI NL SE**

(56) References cited:
**GB-A- 951 082**
**US-A-3 825 905**

**PROCEEDINGS OF THE FOURTH INTERNATIONAL CONFERENCE ON COMPUTER COMMUNICATION, Kyoto, 26th-29th September 1978, pages 675-680, North-Holland Publishing Company, Amsterdam, NL; H.C. FOLTS: "Evolution toward a universal interface for data communication s"**

(73) Proprietor: **Honeywell Bull Inc.**
**3800 W. 80th Street**
**Minneapolis Minnesota 55431 (US)**

(72) Inventor: **Holtey, Thomas O.**
**10 Crehore Drive**
**Newton Massachusetts (US)**
Inventor: **Raymond, James C.**
**28 Briarwood Road**
**Farmingham Massachusetts (US)**
Inventor: **Noyes, Steven S.**
**878 Main Street**
**Boylston Massachusetts (US)**

(74) Representative: **Geissler, Bernhard, Dr. Patent-und Rechtsanwälte et al Bardehle-Pagenberg-Dost- Altenburg-Frohwitter & Partner Postfach 86 06 20 D-8000 München 86 (DE)**

Courier Press, Leamington Spa, England.

**Description**

This invention pertains to a communications controller in a data processing system and more particularly to apparatus for synchronizing a stream of data bits transmitted from the communications controller to a device in a byte control protocol mode with a byte timing signal generated in the device.

In such a system, no problems will arise if the byte timing signal from the device is synchronized with the byte timing in the communications controller. This, however, is not always convenient to achieve. If this is not achieved, then there is a problem in coping with the "phase difference" between the two byte timings.

The data synchronizing circuitry of this invention provides for synchronizing a serial stream of data bits organized in bytes with a byte timing signal which is synchronous with the data bits but asynchronous to the byte boundaries and wherein the stream of data bits is preceded by at least one all ONEs byte and an all ZEROs byte.

Circuitry in electrical signalling systems wherein the signal used for synchronization comprises a complete series of ONEs alternating with a complete series of ZEROs is already known in the art, e.g. GB patent 951,082, which is directed to time division multiplex methods of combining several pulse code modulated signals and thus does not pertain to the object of the subject invention which is to provide a simple and effective means of dealing with the above identified problem that the byte timing signal of the device is not synchronized with the byte timing in the communications controller.

The data synchronizing circuitry of this invention is thus characterized by a counter which is cleared by a byte timing pulse occurring during an all ONEs byte, counts the number of ONEs following the byte timing pulse in the all ONEs byte, and delivers an output signal group representing at any moment the count then reached by said counter, a shift register to which the data bits are fed, and a multiplexer having its inputs fed from corresponding stages of the shift register and controlled by the signal group of the counter to select for its output data the one of said shift register stages corresponding to the count in the counter.

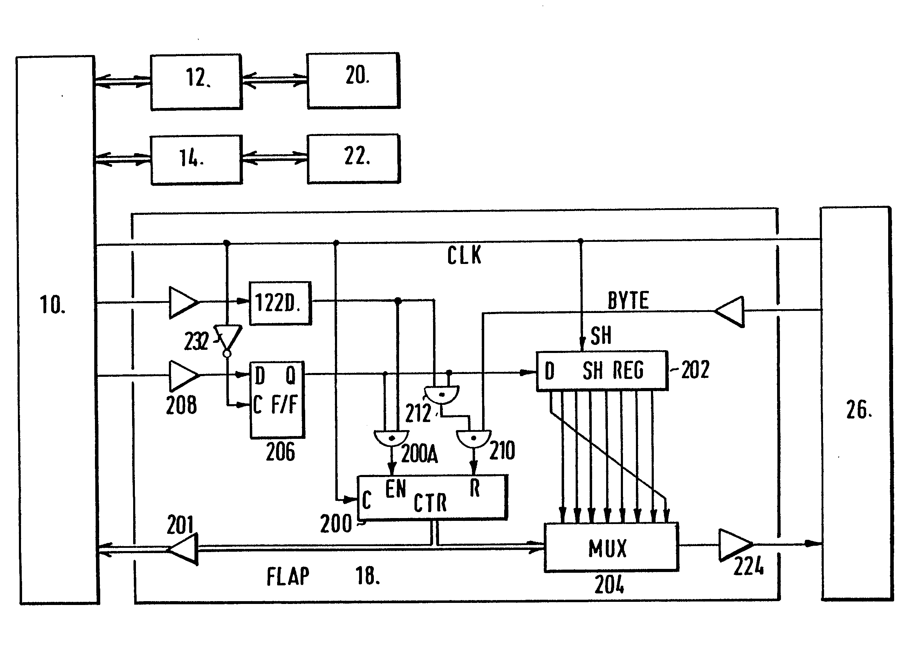

A data communication system embodying the invention will now be described, by way of example, with reference to the drawing, which is a block diagram of the system showing the details of the synchronizing circuitry.

The system comprises three units, a communications controller 10, a peripheral device 26, and the intermediate circuitry which forms part of a flexible line adapter package (FLAP) 18. The FLAP circuitry shown is concerned with the serial transmission of data from the controller 10 to the device 26, under the control of a bit timing signal, on line CLK, which is common to all three units 10, 18, and 26, and a byte timing signal BYTE which provides a pulse every 8th bit from the device 26. Naturally, the FLAP 18 will contain further circuitry, not shown, for other communication functions between the units 10 and 26.

The communication controller 10 sends out data, in the form of a serial stream of bits which are synchronized with the bit clock CLK and are organized into 8-bit bytes, but these bytes are not synchronized with the byte timing signal BYTE. It is therefore necessary for the bit stream to be retimed into synchronism with the BYTE timing signal in order that the device 26 may be able to intercept the incoming data properly, i.e. recognize where the byte boundaries occur in the bit stream.

The communication controller 10 generates 3 header bytes at the start of information transmission, with the data bytes following on consecutively. These 3 header bytes are two all 1's bytes followed by an all 0's byte, thus:

11111111   11111111   00000000   dddddddd   dddddddd . . .

where d's indicate the bits of the data bytes. In addition, the controller 10 provides various control signals to internal registers in the FLAP 18, including a signal to a register 122D which is set to produce a 1 for a period which starts during the first all 1's bit and falls to 0 at the end of the second all 1's bit or during the all 0's bit.

The data stream is fed from unit 10 through a driver 208 to a data flip-flop 206, and is clocked into this flip-flop by the bit timing signal CLK as inverted by inverter 232, so that the output of the flip-flop is steady when other units in the FLAP 18 are being clocked by signal CLK. The output of flip-flop 206 is fed to an AND gate 212, which is enabled by the signal from register 122D during at least the full length of the second all 1's byte. Gate 212 in turn enables an AND gate 210, to which the byte timing signal BYTE is fed, and which feeds the reset input of a counter 200. Hence the counter 200 is reset to zero by the BYTE timing pulse during the second all 1's byte from flip-flop 206.

The counter 200 is also fed with the bit timing signal CLK at its clock input, and with an enable signal from an AND gate 200A which is fed from flip-flop 206 and the output of register 122D. Hence the counter will start to count after being reset and will count for as long as the output of flip-flop 206 remains at 1. This means that it will count the number of bits in the second all 1's byte following the BYTE pulse.

When the second all 1's byte ends, the counter 200 will stop counting during the all 0's byte (because the output of flip-flop 206 will be 0), and will be prevented from counting after that because the output from register 122D will be 0. Hence the counter will store a count indicative of the spacing between the byte boundaries in the stream of data bytes and the BYTE pulses.

**0 049 627**

The flip-flop 206 also feeds a shift register 202, which is clocked with the CLK signal, so that the stream of data bits which follows the header bytes will be fed continuously into the shift register 202 and pass steadily along it. The shift register is 8 bits long, and its 8 outputs are fed to the 8 inputs of a multiplexer 204, which is controlled by the counter 200. The counter 200 contains a count of from 0 to 7, depending on the distance between the BYTE pulses and the data byte boundaries. For each count, the data bit stream has to be delayed by an associated number of CLK (bit) pulses. Accordingly the counter 200 causes the multiplexer to select the appropriately delayed output from the shift register 202. The output of the multiplexer 204 is fed via a driver 224 to the device 26.

It will be seen that one of the outputs of the shift register 202 is crossed over the others in the connection to the multiplexer 204. This is because the count in counter 200 is 1 off the number of the required output from shift register 202.

The communication controller 10 may be coupled through FLAP's 12, 14, etc., similar to FLAP 18 to further respective devices 20, 22, etc. The CLK line will be common to all devices, but each device will have its own individual byte timing line.

In such a system, it can be arranged that each of the devices 20, 22 . . . 26, etc., has its own individual timing for its byte synchronization signal, provided of course that the number of devices is no more than 8. If this is done, then the timing of the device's byte timing signal can be used to identify the device to the unit 10. The unit 10 has its own internal byte timing, which bears fixed relationships to the byte timing signals of all the devices. If communication is initiated by a device, through its respective FLAP, that FLAP will be enabled by the device while the other FLAPs are not enabled. When the unit 10 starts to send out its information bit stream, the enabled FLAP will have its counter 200 set to a count which is distinctive of its associated device. This count can be transmitted to the unit 10, via drivers 201, and the unit 10 can then, by inspecting the count value on a collecting count bus therein, determine which device it is communicating with.

### Claims

1. Data synchronizing circuitry for synchronizing a serial stream of data bits organized in bytes with a byte timing signal which is synchronous with the data bits but asynchronous to the byte boundaries, wherein the stream of data bits is preceded by at least one all ONE's byte and an all ZEROs byte, characterized by a counter (200) which is cleared by a byte timing pulse occurring during an all ONEs byte, counts the number of ONEs following the byte timing pulse in the all ONEs byte, and delivers an output signal group representing at any moment the count then reached by said counter, a shift register (202) to which the data bits are fed, and a multiplexer (204) having its inputs fed from corresponding stages of the shift register and controlled by the signal group of the counter to select for its output data the one of said shift register stages corresponding to the count in the counter.

2. A data communication system comprising a communications controller coupled to a plurality of devices by means of a corresponding plurality of adapters each including data synchronizing circuitry according to Claim 1, characterized in that each device has a different timing for its byte timing signal, and each synchronizing circuitry feeds its count to the communications controller so as to identify the device being serviced.

### Patentansprüche

1. Datensynchronisierende Schaltung zum Synchronisieren eines seriellen Stroms von Datenbits, organisiert in Bytes, mit einem Byte-Takt-Signal, das mit den Datenbits synchron, jedoch zu den Byte-Flanken asynchron ist, wobei dem Strom von Datenbits mindestens ein Byte mit lauter Einsen und ein Byte mit lauter Nullen vorausgeht, gekennzeichnet durch einen Zähler (200), der zurückgesetzt wird durch einen Byte-Takt-Impuls, der während eines Bytes mit lauter Einsen auftritt, der die Anzahl der dem Byte-Takt-Impuls im Byte mit lauter Einsen folgenden Einsen zählt, und der eine Ausgangssignalgruppe liefert, die zu jedem Zeitpunkt die dann durch den Zähler erreichte Zahl repräsentiert,

ein Verschiebe-Register (202), dem die Datenbits zugeführt werden, und durch

einen Multiplexer (204), dessen Eingänge von entsprechenden Stufen des Verschiebe-Registers gespeist und durch die Signalgruppe des Zählers gesteuert werden, um für seine Ausgangsdaten die eine der Verschiebe-Registerstufen auszuwählen, die der Zahl im Zähler entspricht.

2. Datenkommunikationssystem mit einer Kommunikationssteuerung, die mit einer Vielzahl von Geräten mit Hilfe einer entsprechenden Anzahl von Adaptern gekuppelt ist, von denen jeder eine datensynchronisierende Schaltung nach Anspruch 1 umfaßt, dadurch gekennzeichnet, daß jedes Gerät eine unterschiedliche Zeitsteuerung für sein Byte-Takt-Signal aufweist, und daß jede datensynchronisierende Schaltung ihren Zahlwert der Kommunikationssteuerung derart zuführt, daß diese das bediente Gerät identifiziert.

### Revendications

1. Circuit de synchronisation de données pour synchroniser un train de bits de données en série organisé en multiplets avec un signal chronométrique par multiplet synchrone avec des bits de données mais asynchrone par rapport aux limites des multiplets, dans lequel le train de bits de données est précédé d'au moins un multiplet ne contenant que des UN et d'un multiplet ne contenant que des ZERO,

caractérisé par un compteur (200) qu'annule une impulsion chronométrique par multiplet qui se produit au cours d'un multiplet ne contenant que des UN, qui compte le nombre de UN qui suivent l'impulsion chronométrique par multiplet dans les multiplets ne contenant que des UN et qui fournit un groupe de signaux de sortie représentant à tout moment le compte alors atteint par ledit compteur, par un registre à décalage (202) auquel sont envoyés les bits de données et par un multiplexeur (204) dont les entrées reçoivent leurs signaux des étages correspondants du registre à décalage et qui est commandé par le groupe de signaux du compteur pour choisir, pour sa donnée de sortie, celui des dits étages du registre à décalage qui correspond au compte qui se trouve dans le compteur.

2. Système de communication de données comportant une unité de commande de communication couplée à une pluralité de périphériques au moyen d'une pluralité correspondante d'adaptateurs comprenant chacun un circuit de synchronisation de données selon la revendication 1,

caractérisé en ce que chaque périphérique possède une chronométrie différente pour son signal chronométrique par multiplet; et en ce que chaque circuit de synchronisation envoie son compte à l'unité de commande de communication de façon que celle-ci identifie le périphérique en service.